# EUROPÄISCHE PATENTSCHRIFT

(11) **EP 0 914 986 B1**
(45) Veröffentlichungstag und Bekanntmachung des Hinweises auf die Patenterteilung: **11.06.2003**
(21) Anmeldenummer: 98203544.6
(22) Anmeldetag: 21.10.1998
(51) Int. Cl.: B60P 3/055

(54) **Sattelauflieger zum Transport von Gasflaschen mit hohem Betriebsdruck**
Semi-trailer for transporting gas bottles with high service pressure
Semi-remorque pour le transport de bouteilles de gaz à haute pression de service

(30) Priorität: 06.11.1997 DE 19748990
(43) Veröffentlichungstag der Anmeldung: 12.05.1999
(73) Patentinhaber: Gofa Gocher Fahrzeugbau GmbH & Co. K.G., 47574 Goch (DE)
(72) Erfinder: Janssen, Heinrich, 47574 Goch (DE)
(74) Vertreter: Ackmann, Günther, Dr.-Ing.

(56) Entgegenhaltungen:
- EP-A- 0 138 799
- FR-A- 705 052
- FR-A- 813 304
- FR-A- 896 767
- FR-A- 1 123 994
- GB-A- 2 066 935
- US-A- 2 011 347

## Beschreibung

Die Erfindung betrifft einen Sattelauflieger zum Transport von Gasflaschen mit hohem Betriebsdruck, insbesondere Wasserstoffflaschen, bestehend aus einem sich über die gesamte Länge des Sattelaufliegers erstreckenden, durch Vertikal- und Diagonalstreben verstärkten Fachwerkrahmen mit Einrichtungen zum lotrechten Aufstellen der Gasflaschen.

Zum Spezialtransport von Gasflaschen im Straßenverkehr, die in der Regel aus Stahl oder Verbundwerkstoffen bestehen und verdichtetes Gas, z.B. Wasserstoff, enthalten, deren Betriebsdruck bis 300 bar betragen kann, finden Sattelauflieger Verwendung. Die bekannten Sattelauflieger sind entweder für einen stehenden oder einen liegenden Transport der Gasflaschen ausgebildet. So sind Pritschenwagen bekannt, auf welche die Druckgasflaschen lotrecht nebeneinander aufgestellt werden. Aus der FR-PS 705 052 ist ein Fahrzeug bekannt, bei dem auf zwei Längsträgern Aufbauten in Form von zweietagigen fachwerkartigen Gestellen mit seitlichen Be- und Entladeöffnungen und einer oberen Stellfläche für Kannen, Flachenkästen u. dgl. angebracht sind. Bekannt ist weiterhin, die Druckgasflaschen in separate fachwerkartig ausgebildete Behälter einzusetzen und an diesen zu arretieren und die Behälter mit einem Kran oder dergleichen auf einen Pritschenwagen abzusetzen, auf dem die Behälter verriegelt werden. Bei einem liegenden Transport werden mehrere große und lange Druckgasflaschen auf der Pritsche befestigt. Bei diesen Ausführungen besteht die tragende Konstruktion des Sattelaufliegers aus zwei Längsträgern, meist in Form von Fischbauchträgem, auf denen eine die Gasflaschen bzw. Container aufnehmende Unterkonstruktion angebracht ist. Diese aus Stahl bestehenden Fahrgestelle sind jedoch besonders schwer, so dass das Verhältnis der aus dem Gas bestehenden Nutzlast zum Gesamttransportgewicht sehr niedrig ist und nur etwa 1 Prozent beträgt.

Um die Lade- und Entladezeiten einzelner Gasflaschen zu verringern, beispielsweise zur Auslieferung von Propangasflaschen, ist ein in der FR-PS 1 123 994 beschriebener gattungsgemässer Sattelauflieger fachwerkartig mit seitlich zugänglichen Abstellzellen versehen. Er besteht aus einem in der mittleren Längsachse angeordneten, sich über die Gesamtlänge erstreckenden fachwerkartigen Mittelträger, der auf dem Fahrwerk und der Zugmaschine aufliegt und an dessen Seiten und Boden in zwei Etagen mit Bodenplatten versehene Einstellzellen angeordnet sind. Die Einstellzellen werden durch Längs- und Querträger sowie Stützstäben gebildet, wobei diese jedoch nicht durch Diagonalstreben über die Gesamtlänge als Fachwerkträger versteift sein können, weil die seitlichen Einstellöffnungen freigehalten werden sollen. Die dadurch auftretenden Biegebeanspruchungen müssen durch zusätzlichen Materialaufwand kompensiert werden. Insgesamt ist diese Fachwerkkonstruktion sehr aufwendig und für ein Einstellen von Gasflaschen von oben ungeeignet.

Aus dem US-Patent 2,011,347 ist ein Sattelauflieger bekannt, der über einen massiven, aus Längsträgern und Querträgern, bestehenden Unterbau verfügt. Dieser Unterbau wird aus Doppel-T-Trägern gebildet, die miteinander verschraubt sind. Auf diesen Unterbau ist ein kastenförmiger Aufbau zur Aufnahme der liegend angeordneten Gasflaschen aufgesetzt, der aus Großblechen mit Ausschnitten besteht. Die dabei gebildeten Blechstreifen (diagonal members) tragen jedoch nur zur Stabilisierung des aufgesetzten Kastens bei und nicht zur Erhöhung der Trageigenschaften des gesamten Fahrzeugaufbaus. Der Kastenaufbau ist im Wesentlichen nur eine Verkleidung. Durch die Wandstärke der liegenden Gasflaschen wird die vorhandene Last unmittelbar in den Unterbau eingeleitet, wobei die Gasflaschen selbsttragend sind.

Nach EP 0 138 799 B1 werden auf einem Pritschenwagen stehend angeordnete Gasflaschen bündelweise durch Spanngurte festgehalten, wobei die Flaschenhälse nach unten weisen, durch Öffnungen einer Auflageplatten ragen, und mit Schrauben an dieser befestigt sind. Der Verspannung dienen über die seitlichen Flaschenreihen gelegte Auflageprofile, die mit Seilen gegenüber der Auflageplatte verspannt werden.

Der Erfindung liegt demgegenüber die Aufgabe zugrunde, einen Sattelauflieger der im Oberbegriff des Anspruchs 1 bezeichneten Art derart auszubilden, dass das Verhältnis Nutzlast zum Gesamtgewicht des Fahrzeugs weiterhin verbessert und die Konstruktion des Tragrahmens vereinfacht wird.

Die im Kennzeichen des Anspruchs 1 angegebene Lösung hat den Vorteil, dass ein wesentlich leichterer Fachwerkträger Anwendung findet, der sich über die gesamte Länge und Breite des Sattelaufliegers erstreckt und in einfacher Weise alle auftretenden Kräfte aufnimmt und in das Fahrwerk weiterleitet. Der Fachwerkträger nimmt weiterhin die Gasflaschen auf, die lotrecht auf einem Stellboden abgestellt werden und arretiert werden können.

Der Fachwerkträger weist an seinen beiden äußeren Längsseiten je zwei durch Vertikal- und Diagonalstreben verbundene Längsträger auf, die durch untere und obere Quer- sowie Diagonalstreben verbunden sind. Die Quer- und Diagonalstreben sind einerseits am vorderen und rückwärtigen Ende des Fachwerkträgers angeordnet, andererseits auch in gleichmäßiger Verteilung innerhalb des Fachwerkträgers, wodurch gewissermaßen mehrere Einstellkammern gebildet werden. Der Stellboden für die Gasflaschen kann aus Querträgern gebildet werden, die an den unteren Längsträgern befestigt sind und Einrichtungen zur Auflage der Druckgasflaschenböden aufweisen. Der Arretierung der Gasflaschen dienen Querschienen, die zwischen den beiden te des Sattelaufliegers erstreckt und in einfacher Weise alle auftretenden Kräfte aufnimmt und in das Fahrwerk weiterleitet. Der Fachwerkträger nimmt weiterhin die Gasflaschen auf, die lotrecht auf einem Stellboden abgestellt werden und arretiert werden können.

Der Fachwerkträger weist an seinen beiden äußeren Längsseiten je zwei durch Vertikal- und Diagonalstreben verbundene Längsträger auf, die durch untere und obere Quer- sowie Diagonalstreben verbunden sind. Die Quer- und Diagonalstreben sind einerseits am vorderen und rückwärtigen Ende des Fachwerkträgers angeordnet, andererseits auch in gleichmäßiger Verteilung innerhalb des Fachwerkträgers, wodurch gewissermaßen mehrere Einstellkammern gebildet werden. Der Stellboden für die Gasflaschen kann aus Querträgern gebildet werden, die an den unteren Längsträgern befestigt sind und Einrichtungen zur Auflage der Druckgasflaschenböden aufweisen. Der Arretierung der Gasflaschen dienen Querschienen, die zwischen den beiden oberen Längsträgern lösbar angebracht und an denen die Flaschenköpfe arretierbar sind. Außerdem sind zweckmäßig die oberen Querschienen mit dem jeweils darunter angeordneten Querträger durch Zuganker verbunden. Um den Ladebereich für Personen zugänglich zu machen, sind vorzugsweise an den beiden oberen Längsträgern Laufstege angeordnet, die sich über die Querschienen erstrecken und nach innen klappbar sind.

In der Zeichnung ist ein Ausführungsbeispiel der Erfindung dargestellt, es zeigt
- Fig. 1: einen Sattelauflieger mit ausgefahrenen Stützwinden in einer perspektivischen Darstellung,
- Fig. 2: den dem Sattelauflieger der Fig. 1 zugehörigen Fachwerkträger in einer perspektivischen Darstellung,
- Fig. 3: den Gegenstand der Fig. 2 in einem Längsschnitt und einem größeren Maßstab,
- Fig. 4: den Gegenstand der Fig. 3 in einer Draufsicht,
- Fig. 5: den Gegenstand der Fig. 3 in einem Schnitt nach Linie I-I,
- Fig. 6: den Gegenstand der Fig. 1 in einer Seitenansicht und in einem größeren Maßstab,
- Fig. 7: den Gegenstand der Fig. 6 in einer Ansicht von der Fahrzeugrückseite,
- Fig. 8: die Bodeneinfassung einer Druckgasflasche und deren Arretierung am Kopf und
- Fig. 9: die Anordnung eines Zugankers zwischen einem Querträger und einer Querschiene.

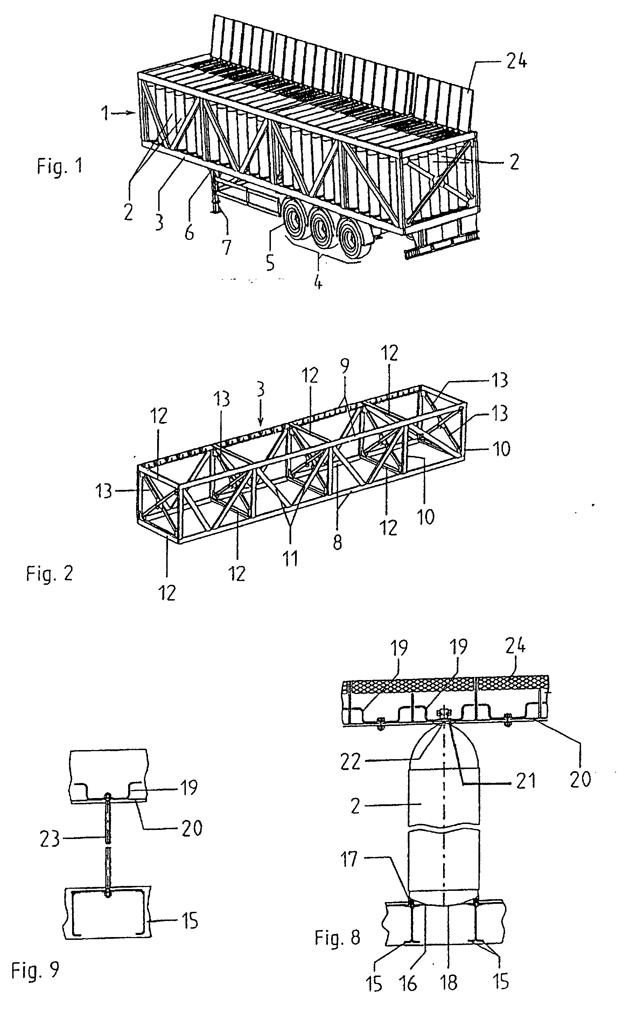

Der in Fig. 1 dargestellte Sattelauflieger 1 dient dem Transport von Gasflaschen 2 die z.B. Wasserstoff, Sauerstoff oder andere hochverdichtete Gase mit einem Betriebsdruck von beispielsweise 200 bis 300 bar enthalten. Sie bestehen in der Regel aus Stahl, doch sind auch Gasflaschen 2 aus Verbundwerkstoffen bekannt. Der Sattelauflieger 1 besteht im wesentlichen aus einem einheitlichen Fachwerkträger 3, der sich über die gesamte Länge und Breite des Sattelaufliegers 1 erstreckt und an dem unmittelbar ein mit sechs Rädern 5 ausgerüstetes Fahraggregat 4 und ein mit zwei Stützwinden 7 versehener Stützwindenunterbau 8 angebracht ist. Der Fachwerkträger 3 ist mit einem Stellboden 14 für die Gasflaschen 2 versehen. Er bildet somit die gesamte Tragkonstruktion des Sattelaufliegers 1, welche alle auftretenden Kräfte aufnimmt und in das Fahrwerk sowie in die Stützwinden bzw. auf die Zugmaschine weiterleitet.

Wie die Fig. 2 bis 5 zeigen, weist der Fachwerkträger 3 an seinen beiden Längsseiten je einen unteren und einen oberen Längsträger 8,9 auf, die durch fünf Vertikalstreben 10 und dazwischen befindlichen Diagonalstreben 11 verbunden sind. Weiterhin sind die beiden unteren sowie die beiden oberen Längsträger 8,9 durch Querstreben 12 und Diagonalstreben 13 verbunden, wobei zwei dieser Querverstrebungen 11,12 sich an den den beiden Enden des Fachwerkträgers 3 befinden und drei andere innerhalb des Fachwerkträgers 3 gleichmäßig auf die Länge des Fachwerkträgers 3 verteilt sind. An den unteren Längsträgern 8 sind parallel zu den Querstreben 12 verlaufende Querträger 15 befestigt, welche den Stellboden 14 für die Gasflaschen 2 bilden.

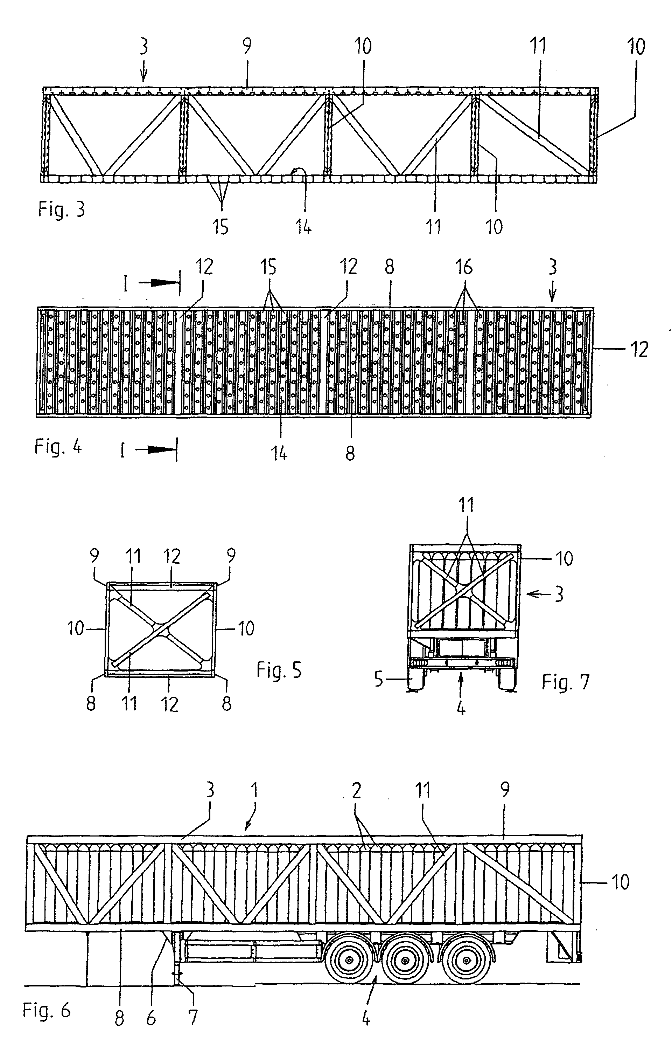

Die Querträger 15 sind, wie die Fig. 4 und 8 zeigen, mit kreisrunden Ausschnitten 16 und Auflageringen 17 aus Gummi oder dergleichen versehen, auf denen der nach unten gewölbte Boden 18 der Gasflaschen 2 aufliegt. Zur Befestigung der Gasflaschen 2 werden zwischen den beiden oberen Längsträgern 9 im Querschnitt etwa hutförmige Querschienen 19 von oben auf die Gasflaschenköpfe 22 aufgelegt (vgl. Fig. 8), wobei sie mit ihren Enden auf einen inneren Auflageschenkel 20 der Längsträger 9 zur Auflage kommen und mit diesen lösbar verbunden sind. Diese Querschienen 19 sind mit Ausschnitten 21 versehen, durch welche die Flaschenköpfe 22 ragen, die an den Ausschnittsrändern mittels Schrauben oder dergleichen befestigt werden. Die eigentliche Arretierung der in Querrichtung verlaufenden Reihen Gasflaschen 2 geschieht durch deren Verspannung zwischen den unteren Querträgern 15, auf denen sie stehen und den oben aufliegenden Querschienen 19 mittels Zuganker 23 (vgl. Fig. 9). Schließlich sind an den beiden oberen Längsträgern 9 nach innen klappbare Laufstege 24 angebracht.

Die Fig. 6 und 7 zeigen einen mit Gasflaschen 2 beladenen Sattelauflieger 1 in einer Seitenansicht und einer Ansicht von der Rückseite des Fahrzeugs, das mittels der beiden Stützwinden 7 aufgestellt ist.

## Patentansprüche

1. Sattelauflieger zum Transport von Gasflaschen mit hohem Betriebsdruck, insbesondere Wasserstoffflaschen, bestehend aus einem sich über die gesamte Länge des Sattelaufliegers erstreckenden, durch Vertikal- und Diagonalstreben verstärkten Fachwerkrahmen mit Einrichtungen zum lotrechten Aufstellen der Gasflaschen,
**dadurch gekennzeichnet,**
**dass** der Fachwerkrahmen als Fachwerkträger (3) ausgebildet ist, wobei an seinen beiden äußeren Längsseiten ein unterer und ein oberer Längsträger (8,9) gleicher Länge vorhanden ist, welche über die Gesamtlänge durch seitliche Vertikalstreben (10) und Diagonalstreben (11) verbunden sind und die beiden unteren sowie die beiden oberen Längsträger (8, 9) durch rechtwinklig zur Längserstreckung des Fahrzeugträgers (3) angeordnete Querstreben (12) und Diagonalstreben (13) verbunden sind, die unter Bildung von Einstellkammern gleichmäßig auf die Länge des Fachwerkträgers (3) verteilt sind.

2. Sattelauflieger nach Anspruch 1,
**dadurch gekennzeichnet,**
**dass** der Stellboden (14) für die Gasflaschen (2) aus Querträgern (15) besteht, die an den unteren Längsträgern (8) befestigt und mit Einrichtungen zur Auflage der Gasflaschenböden (18) versehen sind.

3. Sattelauflieger nach Anspruch 1 oder 2,
**dadurch gekennzeichnet,**
**dass** zwischen den beiden oberen Längsträgern (9) Querschienen (19) lösbar angebracht sind, an denen die Flaschenköpfe (22) arretierbar sind.

4. Sattelauflieger nach einem der Ansprüche 1 bis 3,
**dadurch gekennzeichnet,**
**dass** die oberen Querschienen (19) durch Zuganker (23) mit dem jeweils darunter angeordneten Querträgem (15) verbunden sind.

5. Sattelauflieger nach einem der Ansprüche 1 bis 4,
**dadurch gekennzeichnet,**
**dass** an den beiden oberen Längsträgern (9) sich über die Querschienen (19) erstreckende, nach innen klappbare Laufstege (24) angeordnet sind.

## Claims

1. A semi-trailer for conveying gas cylinders, particularly hydrogen cylinders, at a high operating pressure, the semi-trailer consisting of a lattice frame extending over the entire length of the semi-trailer and reinforced by vertical and diagonal struts and comprising means for vertically holding the gas cylinders, **characterised in that** the lattice frame is a lattice girder (3), wherein a bottom and a top longitudinal bearer (8, 9) of equal length are provided on both outer longitudinal sides and connected along their entire length by lateral vertical struts (10) and diagonal struts (11), and the two bottom and the two top longitudinal bearers (8, 9) are connected by transverse struts (12) and diagonal struts (13) at right angles to the longitudinal extension of the lattice girder (3) and uniformly distributed along the length of the girder (3) and forming insertion chambers.

2. A semi-trailer according to claim 1, **characterised in that** the loading surface (14) for the gas cylinders (2) consists of transverse bearers (15) which are fastened to the lower longitudinal bearers (8) and are provided with means for supporting the bottoms (18) of the gas cylinders.

3. A semi-trailer according to claim 1 or 2, **characterised in that** transverse rails (19) to which the cylinder tops (22) can be locked are releasably disposed between the two upper longitudinal bearers (9).

4. A semi-trailer according to any of claims 1 to 3, **characterised in that** the top transverse rails (19) are connected to the respective transverse bearers (15) therebeneath by tie rods (23).

5. A semi-trailer according to any of claims 1 to 4, **characterised in that** inwardly foldable walkways (24) extending over the transverse rails (19) are disposed on the two upper longitudinal bearers (9).

## Revendications

1. Semi-remorque destinée au transport de bouteilles de gaz à forte pression de service, en particulier de bouteilles d'hydrogène, se composant d'un cadre en treillis s'étendant sur toute la longueur de la semi-remorque et renforcé par des montants verticaux et des barres diagonales, lequel cadre en treillis comprend des dispositifs destinés à placer les bouteilles de gaz verticalement,
**caractérisée en ce que**
le cadre en treillis est conformé en châssis en treillis (3), des longerons supérieurs et inférieurs (8, 9) de même longueur étant disposés sur ses deux côtés longitudinaux extérieurs, lesquels longerons sont reliés sur toute la longueur par des montants verticaux latéraux (10) et par des barres diagonales latérales (11) et les deux longerons supérieurs et inférieurs (8, 9) sont reliés par des barres diagonales (13) et par des traverses (12), disposées à angle droit par rapport à l'étendue longitudinale du châssis en treillis (3), lesquelles sont distribuées uniformément sur la longueur du châssis en treillis (3) en formant des chambres d'entreposage.

2. Semi-remorque selon la revendication 1, **caractérisée en ce que** le fond (14) d'entreposage des bouteilles de gaz (2) se composent de traverses (15) qui sont fixées aux longerons inférieurs (8) et qui sont dotées de dispositifs destinés à supporter le fond (18) des bouteilles de gaz.

3. Semi-remorque selon la revendication 1 ou 2, **caractérisée en ce que** des rails transversaux (19), au niveau desquels les têtes de bouteille (22) peuvent être bloquées, sont montés de façon amovible entre les deux longerons supérieurs (9).

4. Semi-remorque selon les revendications 1 à 3, **caractérisée en ce que** les rails transversaux (19) sont reliés par des tirants (23) aux traverses (15) disposées au-dessous, respectivement.

5. Semi-remorque selon les revendications 1 à 4, **caractérisée en ce que** des passerelles (24), rabattables vers l'intérieur et s'étendant au-dessus des rails transversaux (19), sont montées sur les deux longerons supérieurs (9).
